# EUROPEAN PATENT APPLICATION

(11) **EP 4 209 551 A1**
(43) Date of publication of application: **12.07.2023**
(21) Application number: 22150506.8
(22) Date of filing: 07.01.2022
(51) Int. Cl.: C08L 67/02

(54) **THERMOPLASTIC COMPOSITIONS WITH IMPROVED PERFORMANCE FOR NANO MOLDING TECHNOLOGY (NMT)**

(71) Applicant: SHPP Global Technologies B.V., 4612 PX Bergen op Zoom (NL)
(72) Inventor: WANG, Jian, Shanghai (CN); CHENG, Yunan, Shanghai (CN); ZHENG, Yun, Shanghai (CN)
(74) Representative: Dehns

(57) **Abstract**

Thermoplastic compositions include: a polybutylene terephthalate (PBT) polymer component; a polyetherimide (PEI) polymer component; an impact modifier component; and from about 20 wt% to about 50 wt% of a glass fiber component. An injection molded sample of the composition has no observed mold whitening. The combined weight percent value of all components does not exceed 100 wt%, and all weight percent values are based on the total weight of the composition.

## Description

### FIELD OF THE DISCLOSURE

The present disclosure relates to thermoplastic compositions including a polybutylene terephthalate (PBT) polymer component and a polyetherimide (PEI) polymer component, and in particular to thermoplastic compositions having improved flatness and mold whitening performance properties.

### BACKGROUND OF THE DISCLOSURE

Nano molding technology (NMT) is an innovative technology wherein plastic resins are integrated with metal through convenient injection molding process. NMT materials offer properties such as excellent bonding reliability, high productivity, and good cost efficiency. As a result, NMT materials have been widely used in consumer electronic applications, particularly as the antenna split solution in high-end mobile phones and tablets for better waterproof and antenna efficiency properties. Polyphenylene sulfide (PPS), polybutylene terephthalate (PBT), polyethylene terephthalate (PET), and polyamide (PA) are primary base resins that can be used in NMT applications. With its balanced overall performance such as good bonding strength, good colorability and color stability (i.e. chemical resistance), PBT has become the dominant base resin in the NMT market.

PBT-based NMT materials suffer from a common drawback which is referred to as mold whitening. During injection molding, white marks are observed on the surface of the parts, especially the areas at the end of the melt flow or in parts with a complicated structure and/or thin wall. Mold whitening can be reduced by optimizing the molding conditions, such as by lowering the barrel or tooling temperatures. As a result, however, bonding strength of the polymer with the metal is reduced, lowering the reliability of the NMT material. Mold whitening issues can also be reduced by coating the tooling surface (e.g., mold surface). This greatly increases production cost, however. Accordingly, it would be desirable to have lower-cost PBT-based NMT solution with no mold whitening issues and high polymer to metal bonding strength.

Further, antenna splits in tablet applications are much larger than those in mobile phones. In such applications, the NMT materials must remain flat (i.e., have no warpage). In conventional antenna split applications post-processing (e.g., bending) of the article may be necessary to improve the flatness of the article. This increases cost and reduces the efficiency. Therefore, it is desirable to identify NMT materials with good flatness properties for applications such as tablet antenna splits.

These and other shortcomings are addressed by aspects of the present disclosure.

### SUMMARY

Aspects of the disclosure relate to thermoplastic compositions including: a polybutylene terephthalate (PBT) polymer component; a polyetherimide (PEI) polymer component; an impact modifier component; and from about 20 wt% to about 50 wt% of a glass fiber component. An injection molded sample of the composition has no observed mold whitening. The combined weight percent value of all components does not exceed 100 wt%, and all weight percent values are based on the total weight of the composition.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.
FIG. 1 is a photograph showing mold whitening properties of molded samples of comparative and example compositions according to aspects of the disclosure.
FIG. 2 are photographs showing warpage properties of molded samples of comparative and example compositions according to aspects of the disclosure.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a PBT component" includes mixtures of two or more PBT polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "BisA," "BPA," or "bisphenol A," which can be used interchangeably, as used herein refers to a compound having a structure represented by the formula: 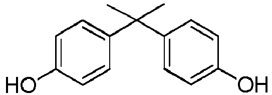 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units" used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: a polybutylene terephthalate (PBT) polymer component; a polyetherimide (PEI) polymer component; an impact modifier component; and from about 20 wt% to about 50 wt% of a glass fiber component, wherein an injection molded sample of the composition has no observed mold whitening. The combined weight percent value of all components does not exceed 100 wt%, and all weight percent values are based on the total weight of the composition.

In some aspects a molded sample of the composition has improved mold whitening performance as compared to a comparative molded sample of a composition that includes polycarbonate homopolymer instead of the PEI polymer component. For comparing the molded sample of the composition to the comparative molded sample the same molding conditions are used and the compositions are otherwise identical except that the comparative composition includes a comparative amount of polycarbonate homopolymer instead of the PEI polymer component.

Improved mold whitening performance may be evaluated by comparing the relative amount of whitening of the sample as compared to the comparative sample. For example in some aspects the sample has 50% less surface area whitening - or 60% less surface area whitening, or 70% less surface area whitening, or 80% less surface area whitening, or 90% less surface area whitening - as compared to the comparative molded sample of a composition that includes polycarbonate homopolymer instead of the PEI polymer component. Mold whitening performance may further be evaluated by assigning a grade rating of from 0 to 5 to the sample based on observed mold whitening with the naked eye, with "0" being no observable mold whitening and "5" being a sample with clearly observable and pronounced mold whitening. In some aspects a molded sample of the composition has at least 1 grade less observed mold whitening as compared to a comparative molded sample of a composition that includes polycarbonate homopolymer instead of the PEI polymer component. In further aspects a molded sample of the composition has at least 2 grades less (e.g., rating of 3 compared to 5) observed mold whitening as compared to the comparative sample, or at least 3 grades less observed mold whitening (e.g., rating of 2 compared to 5), or at least 4 grades less observed mold whitening (e.g., rating of 1 compared to 5), or 5 grades less observed mold whitening (e.g., rating of 0 compared to 5) as compared to the comparative sample.

In some aspects the composition includes from about 30 wt% to about 70 wt% of the PBT polymer component. As used herein, "polybutylene terephthalate" (PBT) can be used interchangeably with poly(1,4-butylene terephthalate). Polybutylene terephthalate a polyester. Polyesters, which include poly(alkylene dicarboxylates), liquid crystalline polyesters, and polyester copolymers, can be useful in the thermoplastic compositions of the present disclosure.

In further aspects the composition includes from about 3 wt% to about 20 wt% of the PEI polymer component. As used herein, "polyetherimide" (PEI) refers to polymers containing ether and optionally substituted imide functional groups in the backbone of the polymer.

In certain aspects the composition further includes a polycarbonate component including a polycarbonate homopolymer, a polycarbonate copolymer, or a combination thereof. The polycarbonate homopolymer may include bisphenol-A (BPA) homopolymer.

The polycarbonate copolymer may include a copolyestercarbonate in some aspects. The copolyestercarbonate copolymer may include ester units of the formula 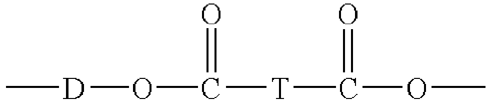 wherein D is a divalent group derived from a dihydroxy compound, and may be, for example, a C₂₋₃₀ alkylene group, a C₃₋₃₀ alicyclic group, a C₆₋₃₀ aromatic group or a polyoxyalkylene group in which the alkylene groups contain 2 to 6 carbon atoms, specifically 2, 3, or 4 carbon atoms; and T divalent group derived from a dicarboxylic acid, and may be, for example, a C₂₋₃₀ alkylene group, a C₆₋₃₀ alicyclic group, a C₆₋₃₀ alkyl aromatic group, or a C₆₋₃₀ aromatic group.

Examples of aromatic dicarboxylic acids from which the T group in the ester is derived include isophthalic or terephthalic acid, 1,2-di(p-carboxyphenyl)ethane, 4,4'-dicarboxydiphenyl ether, 4,4'-bisbenzoic acid, and combinations including at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid includes a combination of isophthalic acid and terephthalic acid wherein the weight ratio of isophthalic acid to terephthalic acid is 99:1 to 1:99. In an aspect, D is a C₂₋₆ alkylene group and T is p-phenylene, m-phenylene, naphthalene, a divalent cycloaliphatic group, or a combination thereof. This class of polyester includes the poly(alkylene terephthalates).

In an aspect, the ester units of the polyester or polyester block include arylate ester units derived from the reaction product of one equivalent of an isophthalic acid derivative and/or terephthalic acid derivative with a resorcinol of the formula 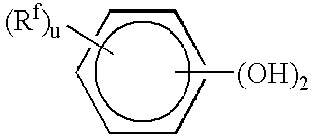 wherein each R^{f} is independently C₁₋₁₂ alkyl, or halogen, and u is 0 to 4. It will be understood that R^{f} is hydrogen when u is 0. Typically, the halogen can be chlorine or bromine. In an aspect, compounds in which the -OH groups are substituted meta to one another, and wherein R^{f} and u are as described above, are also generally referred to herein as resorcinols. Examples of compounds that may be represented by this formula include resorcinol (where u is 0), substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations including at least one of the foregoing compounds.

Such arylate ester units are also referred to herein as isophthalate-terephthalate-resorcinol ester units, sometimes referred to in abbreviated form as ITR ester units. As used herein, isophthalate-terephthalate-resorcinol ester units include a combination isophthalate esters, terephthalate esters, and resorcinol esters. In a specific aspect, isophthalate-terephthalate-resorcinol ester units include a combination of isophthalate-resorcinol ester units and terephthalate-resorcinol ester units, wherein the molar ratio of isophthalate-resorcinol ester units to terephthalate-resorcinol ester units is 99:1 to 1:99, or 95:5 to 5:95, or 90:10 to 10:90, or 80:20 to 20:80. In a specific aspect, where u is 0, the arylate ester units include isophthalate-terephthalate-resorcinol ester units in which the resorcinol is 1,3-dihydroxybenzene. Exemplary aromatic polyester blocks include poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination including at least one of these. In an aspect, a useful arylate polyester block is a poly(isophthalate-terephthalate-resorcinol) ester. In a particular aspect the copolyestercarbonate copolymer includes ITR blocks and polycarbonate blocks, as shown in the formula below: 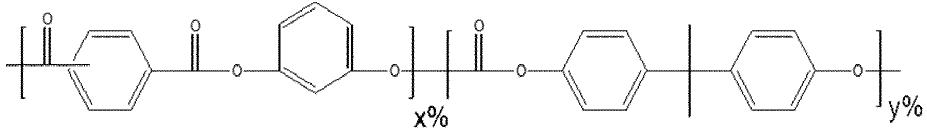 wherein x is the mole % of the ITR ester block and y is the mole % of the polycarbonate block. An exemplary copolyestercarbonate copolymer is SLX 90/10 resin, available from SABIC. SLX 90/10 includes 90 mole % ITR block and 10 mole % PC block.

In yet further aspects the copolyestercarbonate copolymer has a ratio of ITR ester units to polycarbonate monomer units of from 20:80 to 95:5, or from 85:15 to 95:5, or from 88:12 to 92:8, or about 90:10.

In some aspects the composition includes from greater than 0 wt% to about 10 wt% of the polycarbonate component. In further aspects the composition includes from 0.001 wt% to about 10 wt% of the polycarbonate component, or from 0.01 wt% to about 10 wt% of the polycarbonate component, or from 0.1 wt% to about 10 wt% of the polycarbonate component.

In other aspects the composition further includes from greater than 0 wt% to about 3 wt% of an ionomer component. In certain aspects the composition includes from 0.001 wt% to about 3 wt% of an ionomer component, or from 0.01 wt% to about 3 wt% of an ionomer component, or from 0.1 wt% to about 3 wt% of an ionomer component.

The ionomer component may include an acrylate-based ionomer, a sulfonate-based ionomer, or a combination thereof. In specific aspects the ionomer includes a cation including sodium, magnesium calcium, zinc, or a combination thereof. In a further aspect the ionomer is an ethylene-acrylic acid zinc ionomer.

In some aspects the composition further includes from about 2 wt% to about 10 wt% of the impact modifier component. The impact modifier component may include, but is not limited to, an ethylene-acrylic ester-glycidyl methacrylate terpolymer, an ethylene-glycidyl methacrylate copolymer, styrene-ethylene-butylene-styrene (SEBS), or a combination thereof. In a specific aspect the impact modifier component includes an ethylene-acrylic ester-glycidyl methacrylate terpolymer.

The glass fiber component may include flat glass fibers in some aspects.

In certain aspects the composition includes at least one additional additive. The at least one additional additive may include, but is not limited to, an acid scavenger, an anti-drip agent, an antioxidant, an antistatic agent, a chain extender, a colorant, a mold release agent, a flow promoter, a lubricant, a plasticizer, a quenching agent, a flame retardant, a UV reflecting additive, an impact modifier, a blowing agent, a reinforcing agent, or a combination thereof. In specific aspects the composition further includes from about 0.1 wt% to about 2 wt% of at least one additional additive.

In further aspects the composition does not include an additional organic filler component other than the glass fiber component. In yet further aspects the composition includes less than 20 wt%, or less than 15 wt%, or less than 10 wt%, or less than 5 wt%, of an additional inorganic filler component other than the glass fiber component.

Compositions according to aspects of the disclosure may have a metal bonding strength of at least 35 megapascals (MPa) as determined according to ISO 19095 using a TRI-treatment method. The TRI-treatment method is a well-known metal treatment method for NMT compositions. In some aspects the composition has a metal bonding strength of at least 36 MPa, or at least 37 MPa, or at least 38 MPa, or at least 39 MPa, or at least 40 MPa, or at least 41 MPa, or at least 42 MPa, or at least 43 MPa, or at least 44 MPa, or from 35 MPa to 50 MPa, or from 40 MPa to 50 MPa, as determined according to ISO 19095 using a TRI-treatment method.

In further aspects a molded sample of the thermoplastic composition has at least 60% less warpage as compared to a comparative molded sample of a composition that does not include the PEI polymer component. In specific aspects a molded sample of the thermoplastic composition has at least 70% less warpage, or at least 80% less warpage, or at least 90% less warpage, as compared to a comparative molded sample of a composition that does not include the PEI polymer component.

In some aspects the composition has a notched Izod impact strength at 23 °C of at least 140 joules per meter (J/m) as tested in accordance with ASTM D256 at 5 pound force per feet (lbf/ft). In other aspects the composition has a notched Izod impact strength at 23 °C of at least 141 J/m, or at least 142 J/m, or at least 143 J/m, or at least 144 J/m, or at least 145 J/m, or at least 146 J/m, or at least 147 J/m, or at least 148 J/m, or at least 149 J/m, or at least 150 J/m, or at least 151 J/m, or at least 152 J/m, or at least 153 J/m, or at least 154 J/m, or at least 155 J/m, or from 140 J/m to 180 J/m, or from 140 J/m to 170 J/m, or from 140 J/m to 160 J/m, or from 150 J/m to 180 J/m, or from 150 J/m to 170 J/m, or from 150 J/m to 160 J/m, as tested in accordance with ASTM D256 at 5 lbf/ft.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In a particular aspect the article is an antenna split for a mobile telecommunication device.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a polybutylene terephthalate (PBT) polymer component;
a polyetherimide (PEI) polymer component;
an impact modifier component; and
from about 20 wt% to about 50 wt% of a glass fiber component,
wherein an injection molded sample of the composition has no observed mold whitening,
wherein the combined weight percent value of all components does not exceed 100 wt%, and all weight percent values are based on the total weight of the composition.

Aspect 2. The thermoplastic composition according to Aspect 1, wherein the composition comprises from about 30 wt% to about 70 wt% of the PBT polymer component.

Aspect 3. The thermoplastic composition according to Aspect 1 or 2, wherein the composition comprises from about 3 wt% to about 20 wt% of the PEI polymer component.

Aspect 4. The thermoplastic composition according to any of Aspects 1 to 3, wherein the composition further comprises a polycarbonate component comprising a polycarbonate homopolymer, a polycarbonate copolymer, or a combination thereof.

5. The thermoplastic composition according to Aspect 4, wherein the polycarbonate component comprises a polycarbonate copolymer comprising isophthalate-terephthalate-resorcinol (ITR) ester units and polycarbonate units.

Aspect 6. The thermoplastic composition according to Aspect 4 or 5, wherein the composition comprises from greater than 0 wt% to about 10 wt% of the polycarbonate component.

Aspect 7. The thermoplastic composition according to any of Aspects 1 to 6, wherein the composition further comprises from greater than 0 wt% to about 3 wt% of an ionomer component.

Aspect 8. The thermoplastic composition according to Aspect 7, wherein the ionomer component comprises an acrylate-based ionomer, a sulfonate-based ionomer, or a combination thereof.

Aspect 9. The thermoplastic composition according to Aspect 7 or 8, wherein the ionomer comprises a cation comprising sodium, magnesium calcium, zinc, or a combination thereof.

Aspect 10. The thermoplastic composition according to any of Aspects 1 to 9, wherein the composition further comprises from about 2 wt% to about 10 wt% of the impact modifier component.

Aspect 11. The thermoplastic composition according to any of Aspects 1 to 10, wherein the impact modifier component comprises an ethylene-acrylic ester-glycidyl methacrylate terpolymer, an ethylene-glycidyl methacrylate copolymer, styrene-ethylene-butylene-styrene (SEBS), or a combination thereof.

Aspect 12. The thermoplastic composition according to any of Aspects 1 to 11, wherein the glass fiber component comprises flat glass fibers.

Aspect 13. The thermoplastic composition according to any of Aspects 1 to 12, wherein the composition further comprises from about 0.1 wt% to about 2 wt% of at least one additional additive.

Aspect 14. The thermoplastic composition according to Aspect 13, wherein the at least one additional additive comprises an acid scavenger, an anti-drip agent, an antioxidant, an antistatic agent, a chain extender, a colorant, a mold release agent, a flow promoter, a lubricant, a plasticizer, a quenching agent, a flame retardant, a UV reflecting additive, an impact modifier, a blowing agent, a reinforcing agent, or a combination thereof.

Aspect 15. The thermoplastic composition according to any of Aspects 1 to 14, wherein the composition has a metal bonding strength of at least 35 megapascals (MPa) as determined according to ISO 19095 using a TRI-treatment method.

Aspect 16. The thermoplastic composition according to any of Aspects 1 to 15, wherein a molded sample of the thermoplastic composition has at least 60% less warpage as compared to a comparative molded sample of a composition that does not include the PEI polymer component.

Aspect 17. The thermoplastic composition according to any of Aspects 1 to 16, wherein the composition has a notched Izod impact strength at 23 °C of at least 140 joules per meter (J/m) as tested in accordance with ASTM D256 at 5 pound force per feet (lbf/ft).

Aspect 18. An article comprising the thermoplastic composition according to any of Aspects 1 to 17.

Aspect 19. The article according to Aspect 18, wherein the article is an antenna split for a mobile telecommunication device.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Comparative and example compositions were extruded and injection molded according to the conditions set forth in Tables 1 and 2:

**Table 1 - Typical Extrusion Profile**

| **Parameters** | **Unit** | **Condition** |
|---|---|---|
| Compounder Type | NONE | TEM-37BS |
| Barrel Size | mm | 1500 |
| Die | mm | 4 |
| Zone 1 Temp | °C | 100 |
| Zone 2 Temp | °C | 200 |
| Zone 3 Temp | °C | 260 |
| Zone 4 Temp | °C | 260 |
| Zone 5 Temp | °C | 260 |
| Zone 6 Temp | °C | 260 |
| Zone 7 Temp | °C | 260 |
| Zone 8 Temp | °C | 260 |
| Zone 9 Temp | °C | 260 |
| Zone 10 Temp | °C | 260 |
| Zone 11 Temp | °C | 260 |
| Die Temp | °C | 260 |
| Screw speed | rpm | 200 |
| Throughput | kg/hr | 50 |
| Torque | % | 80-90 |
| Vacuum 1 | bar | -0.08 |
| Side Feeder 1 speed | rpm | 250 |
| Melt temperature | °C | 265-275 |

**Table 2 - Typical Molding Profile**

| **Parameters** | **Unit** | **Condition** |
|---|---|---|
| Pre-drying time | Hour | 4 |
| Pre-drying temp | °C | 120 |
| Molding Machine | NONE | FANUC; SE180 |
| Mold Type (insert) | NONE | ASTM Tensile, Flexural, & IZOD bars; 100×45×3.0mm & 150×150×1.5mm parts |
| Hopper temp | °C | 50 |
| Zone 1 temp | °C | 240-260 |
| Zone 2 temp | °C | 250-270 |
| Zone 3 temp | °C | 260-280 |
| Nozzle temp | °C | 240-260 |
| Mold temp | °C | 120-150 |
| Screw speed | rpm | 100 |
| Back pressure | kgf/cm² | 30 |
| Cooling time | s | 20-30 |
| Injection speed | mm/s | 50-100 |
| Holding pressure | kgf/cm² | 800-1000 |
| Max. Injection pressure | kgf/cm² | 1000-1500 |

The following abbreviations are used in the tables provided herein: micron (µm); millimeter (mm); degrees Celsius (°C); revolutions per minute (rpm); kilograms per hour (kg/hr); kilogram force per square meter (kgf/cm²); seconds (s); megapascals (MPa); cubic centimeters per 10 minutes (cm³/10min); Joules per meter (J/m); and pound force per foot (lbf/ft).

### Example 1

Comparative and example compositions were formed as shown in Table 3; selected properties of these compositions are shown in Table 4. Component amounts are shown in weight percentage based on 100 wt% of the composition:

**Table 3 - PBT-based NMT Compositions**

| **Item Description** | **C1** | **E1.1** | **E1.2** | **E1.3** | **E1.4** | **E1.5** |
|---|---|---|---|---|---|---|
| PBT, low viscosity (Gromax 1200-21 1D) | 33 | 33 | 29 | 28 | 31 | 31 |
| PBT, high viscosity (Gromax 1100-21 IX) | 12 | 12 | 12 | 15 | 12 | 10 |
| PCP1300 (PC homopolymer, SABIC) | 8 | | | | | |
| SLX 90/10 (SABIC) | | | | | | 3 |
| Ultem^{®} 1010 PEI (SABIC) | | 8 | 12 | 10 | 10 | 10 |
| Glass fiber, flat, 3PA-830 (Nittobo) | 42 | 42 | 42 | | 42 | 42 |
| Glass fiber, 10 µm, round (CPIC) | | | | 40 | | |
| AX8900 impact modifier (Lotader) | 4 | 4 | 4 | 4 | 3 | 3 |
| SEBS G1651 (Kraton) | | | | 2 | | |
| Ethylene-Acrylic Acid Zinc Ionomer | | | | | 1 | |
| Mono zinc phosphate | 0.05 | 0.05 | 0.05 | 0.05 | 0.05 | 0.05 |
| Pentaerythritol tetrastearate | 0.3 | 0.3 | 0.3 | 0.3 | 0.3 | 0.3 |
| 2-(2'hydroxy-5-t-octylphenyl)-benzotriazole | 0.25 | 0.25 | 0.25 | 0.25 | 0.25 | 0.25 |
| Irganox 1010 | 0.1 | 0.1 | 0.1 | 0.1 | 0.1 | 0.1 |
| Hostanox P-EPQ P | 0.1 | 0.1 | 0.1 | 0.1 | 0.1 | 0.1 |
| Carbon black | 0.2 | 0.2 | 0.2 | 0.2 | 0.2 | 0.2 |

**Table 4 - Properties of Table 3 Compositions**

| **Property** | **Test Method/ Standard** | **Unit** | **C1** | **E1.1** | **E1.2** | **E1.3** | **E1.4** | **E1.5** |
|---|---|---|---|---|---|---|---|---|
| Bonding strength | TRI-treatment, ISO 19095 | MPa | 44.5 | 41.1 | 40.9 | 41.3 | 45.2 | 44.1 |
| MVR | 275 °C/5kg, ASTM D1238 | cm³/10min | 30 | 26.5 | 18.2 | 11.5 | 25.9 | 24.1 |
| Notched Izod | 23 °C, 5 lbf/ft, ASTM D256 | J/m | 130 | 163 | 168 | 156 | 157 | 150 |
| | -30 °C, 5 lbf/ft, ASTM D256 | J/m | 97 | 129 | 134 | 116 | 126 | 124 |
| Un-notched Izod | 23 °C, 5 lbf/ft, ASTM D256 | J/m | 890 | 913 | 982 | 940 | 1060 | 1030 |
| HDT | 1.82 MPa/3.2 mm, ASTM D648 | °C | 205 | 202 | 197 | 187 | 199 | 195 |
| | 0.45 MPa/3.2 mm, ASTM D648 | °C | 221 | 220 | 219 | 218 | 219 | 217 |
| Flexural Modulus | 3.2 mm, 1.27 mm/min, ASTM D790 | MPa | 11000 | 11100 | 11100 | 10000 | 10500 | 11100 |
| Flexural Strength | at break, 3.2mm, ASTM D790 | MPa | 215 | 226 | 230 | 202 | 220 | 223 |
| Tensile Modulus | 5mm/min, ASTM D638 | MPa | 12500 | 11799 | 11926 | 10408 | 12151 | 12524 |
| Tensile Strength | at break, ASTM D638 | MPa | 140 | 150 | 153 | 133 | 139 | 143 |
| Tensile Elongation | at break, ASTM D638 | % | 2.60 | 2.47 | 2.53 | 2.65 | 2.64 | 2.47 |

PBT based NMT compositions with improved or no mold whitening were prepared as shown in Table 3. Compositions E1.1 and E1.2 included PEI as a bonding force promoter with different loadings, flat glass fiber as the filler, and ethylene-acrylic ester-glycidyl methacrylate terpolymer (i.e. AX8900) as an impact modifier. E1.3 also included PEI as a bonding force promoter. However, 10 µm round glass fiber was used as the filler with AX8900 and SEBS as impact modifiers. To further improve the bonding force with the metal, ethylene-acrylic acid Zinc ionomer (AClyn^{®} 295A from Honeywell) and PC copolymer (copolyestercarbonate) SLX 90/10 were included in E1.4 and E1.5, respectively. Composition C1 is a comparative sample including polycarbonate (PC) homopolymer as a bonding force promoter.

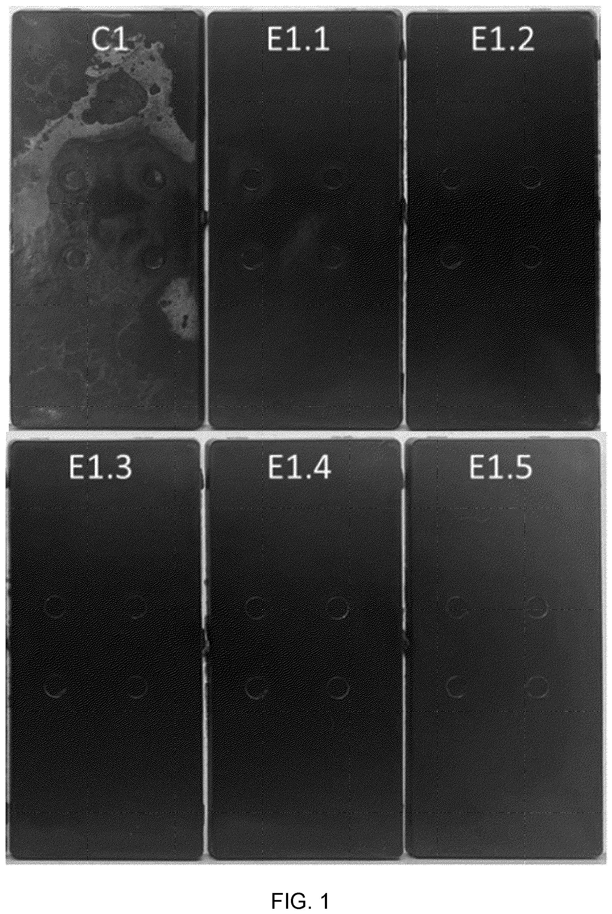

Physical and mechanical properties and mold whitening performance of the PBT-based NMT compositions is shown in Table 4 and FIG. 1, respectively. The samples in FIG. 1 were 100 mm × 45 mm × 3.0 mm and were molded at a melting temperature of 280 °C and a tooling temperature of 150 °C. As shown in Table 4, all of the example compositions showed good mechanical performance, including but not limited to good impact strength (≥ 150 J/m at 23 °C), high tensile modulus, high flexural modulus, and high tensile strength.

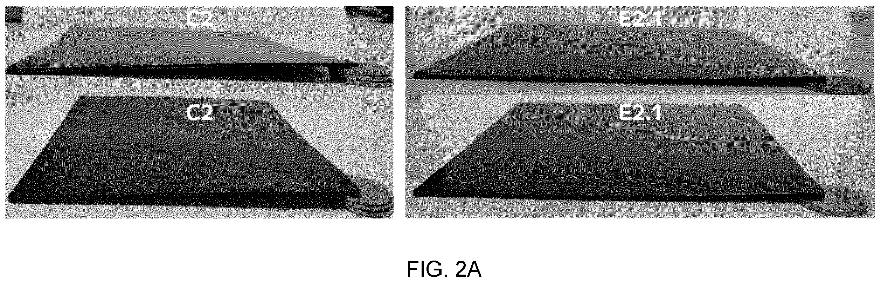

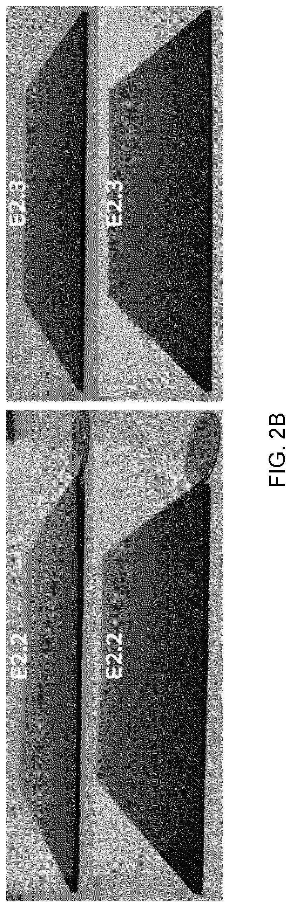

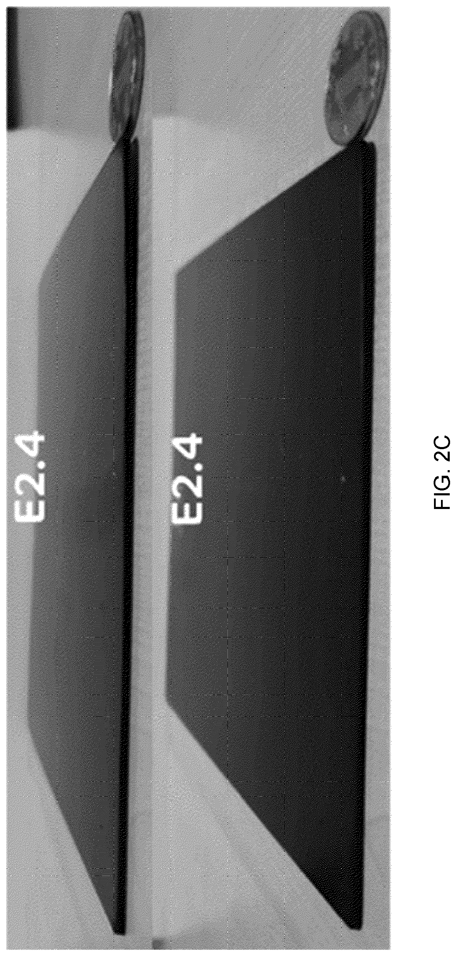

Comparing E1.1 with C1, when the bonding force promoter was changed from PC to PEI, bonding strength of the composition with aluminum after TRI treatment decreased slightly from 44.5 to 41.1 MPa. However, the mold whitening performance substantially improved. As shown in FIG. 2, comparative composition C1 had pronounced mold whitening. However, little mold whitening was observed for the E1.1 sample. When the PEI content was increased to 12% (example composition E1.2), bonding strength of the composition was maintained, but surprisingly mold whitening disappeared - i.e., example composition E1.2 had no mold whitening. When the filler was changed to the conventional round glass fiber, and the impact modifier changed to a group of AX8900 and SEBS, still using PEI as the bonding force promoter with 10% loading, the composition in E1.3 also showed good metal bonding strength (i.e. 41.3 MPa under TRI treatment) and no mold whitening (see E1.3 in FIG. 1).

Example compositions E1.4 and E1.5 had further improved bonding force. As shown, by adding an ionomer or PC copolymer (SLX90/10), bonding force was substantially increased to 45.2 and 44.1 MPa, respectively, comparable to that of comparative composition C1. As illustrated in FIG. 1, no whitening was found during the molding of the E1.4 and E1.5 samples.

In sum, when PEI was used as the bonding force promoter, supported by the ionomer and/or PC copolymer, the disclosed PBT based NMT compositions showed good bonding force and had no mold whitening issue.

### Example 2

Additional PBT-based compositions including PC homopolymer were prepared and various properties evaluated as shown in Tables 5 and 6. Component amounts are shown in weight percentage based on 100 wt% of the composition:

**Table 5 - PBT-based NMT Compositions**

| **Item Description** | **C2** | **E2.1** | **E2.2** | **E2.3** | **E2.4** |
|---|---|---|---|---|---|
| PBT, low viscosity (Gromax 1200-21 1D) | 33 | 31 | 27.5 | 24 | 26.5 |
| PBT, high viscosity (Gromax 1100-21 IX) | 12 | 10 | 9 | 8 | 10 |
| PCP1300 (PC homopolymer, SABIC) | 8 | 7 | 6.5 | 6 | 6.5 |
| Ultem^{®} 1010 PEI (SABIC) | | 5 | 10 | 15 | 10 |
| Glass fiber, flat, 3PA-830 (Nittobo) | 42 | 42 | 42 | 42 | 42 |
| AX8900 impact modifier (Lotader) | 4 | 4 | 4 | 4 | 3 |
| Ethylene-Acrylic Acid Zinc Ionomer | | | | | 1 |
| Mono zinc phosphate | 0.05 | 0.05 | 0.05 | 0.05 | 0.05 |
| Pentaerythritol tetrastearate | 0.3 | 0.3 | 0.3 | 0.3 | 0.3 |
| 2-(2'hydroxy-5-t-octylphenyl)-benzotriazole | 0.25 | 0.25 | 0.25 | 0.25 | 0.25 |
| Irganox 1010 | 0.1 | 0.1 | 0.1 | 0.1 | 0.1 |
| Hostanox P-EPQ P | 0.1 | 0.1 | 0.1 | 0.1 | 0.1 |
| Carbon black | 0.2 | 0.2 | 0.2 | 0.2 | 0.2 |

**Table 6 - Properties of Table 5 Compositions**

| **Property** | **Test Method/ Standard** | **Unit** | **C2** | **E2.1** | **E2.2** | **E2.3** | **E2.4** |
|---|---|---|---|---|---|---|---|
| Bonding strength | TRI-treatment, ISO 19095 | MPa | 44.5 | 40.9 | 38.9 | 38.1 | 43.8 |
| MVR | 275 °C/5kg, ASTM D1238 | cm³/10min | 30 | 25.9 | 19.6 | 11.1 | 17.1 |
| Notched Izod | 23 °C, 5 lbf/ft, ASTM D256 | J/m | 130 | 157 | 151 | 156 | 151 |
| | -30 °C, 5 lbf/ft, ASTM D256 | J/m | 97 | 125 | 129 | 133 | 131 |
| Un-notched Izod | 23°C, 5 lbf/ft, ASTM D256 | J/m | 890 | 1020 | 980 | 877 | 1000 |
| HDT | 1.82 MPa/3.2 mm, ASTM D648 | °C | 205 | 204 | 195 | 169 | 193 |
| | 0.45 MPa/3.2 mm, ASTM D648 | °C | 221 | 221 | 219 | 213 | 218 |
| Flexural Modulus | 3.2 mm, 1.27 mm/min, ASTM D790 | MPa | 11000 | 10900 | 10800 | 10900 | 11100 |
| Flexural Strength | at break, 3.2 mm, ASTM D790 | MPa | 215 | 227 | 224 | 222 | 230 |
| Tensile Modulus | 5 mm/min, ASTM D638 | MPa | 12500 | 11518 | 11448 | 11573 | 12817 |
| Tensile Strength | at break, ASTM D638 | MPa | 140 | 145 | 147 | 147 | 150 |
| Tensile Elongation | at break, ASTM D638 | % | 2.60 | 2.43 | 2.40 | 2.29 | 2.72 |
| Shrinkage | Parallel, ASTM D955 | % | 0.25 | 0.15 | 0.18 | 0.12 | / |
| | Perpendicular, ASTM D955 | % | 0.51 | 0.46 | 0.35 | 0.33 | / |

In example compositions E2.1 to E2.3 loading of the PEI resin in the compositions increased from 5% to 15%. Flat glass fiber was used as the filler, AX8900 was the impact modifier. PC homopolymer was included in the compositions for good metal bonding strength and high glue adhesion performance with glass. In E2.4, ethylene-acrylic acid Zinc ionomer (AClyn^{®} 295A from Honeywell) was added to further improve the bonding strength. Comparative composition C2 included only PC homopolymer as the bonding force promoter.

The physical and mechanical properties and flatness performance of the disclosed PBT based NMT compositions is shown in Table 6 and FIG. 2, respectively. As shown in Table 6, all the compositions showed good mechanical performance, including but not limited to good impact strength (> 150 J/m at 23 °C), high tensile modulus, high flexural modulus, and high tensile strength. Thermal performance of the composition changed with the PEI loading. When the PEI content in the formulation increased from 5% to 15%, the heat distortion temperature (HDT) at 1.82 MPa decreased from 204 °C to 169 °C. Further, mold shrinkage of the composition decreased with the increase of the PEI content (see example compositions E2.1 to E2.3).

Comparing E2.1 with C2, when 5% PEI was added in the formulation, bonding force of the composition decreased slightly from 44.5 MPa to 40.9 MPa. However, flatness of the molded parts improved substantially. As shown in FIG. 2, when the molded part (size: 150 mm × 150 mm 1.5 mm, molded at a melting temperature of 280 °C and a tooling temperature of 150 °C) was placed on a flat surface, a small gap was observed at the corners - this was caused by warpage of the sample. For the part formed from comparative composition C2, three coins could be put into the gap (coin thickness in all images was 1.85 mm). In contrast, only one coin could be placed into the gap of the sample formed from the E2.1 composition. Accordingly, example composition E2.1 had substantially improved flatness performance compared to comparative composition C2.

When the PEI content was increased to 10% (example composition E2.2), flatness of the molded part could be further improved with a slight decrease of the bonding strength to 38.9 MPa. As shown in FIG. 2, when the molded part from the E2.2 composition was placed on the flat surface, the gap at the corner was less than the thickness of the coin (the coin could not be placed in the gap), meaning that E2.2 has better warpage control as compared to composition E2.1. When the PEI content was further increased to 15% (see example composition E2.3), flatness performance was further improved. As shown in FIG. 2, nearly no gap could be found when the part from E2.3 sample was placed on a flat surface, indicating that the composition of E2.3 had nearly no warpage when molded into the part.

To improve the bonding strength of the composition, an ionomer (ethylene-acrylic acid zinc ionomer) was included in the composition. As shown in E2.4, with the adding of ionomer in the formulation, bonding strength of the composition was greatly improved to 43.8 MPa, more than 12% higher than that with no ionomer (see example composition E2.2 having a bonding strength of 38.9 MPa). Inclusion of an ionomer had no obvious influence on the flatness performance of the composition. As shown in FIG. 2, a small gap was observed when the molded part from example composition E2.4 was placed on the surface. And similar to that of example composition E2.2, the gap was smaller than the thickness of the coin.

It was also observed that these compositions had good glue adhesion performance with glass. Using the polyurethane glue EH9777BS from H. B. Fuller, following the standard of ASTM 2794, adhesion of these compositions with glass was greater than 800 millijoules (mJ), or even greater than 850 mJ or even greater than 900 mJ.

In sum, when PEI and PC together were used as the bonding force promoter, supported by the ionomer, the disclosed PBT based NMT compositions had good bonding strength and improved flatness performance.

From the examples, PBT-based NMT compositions with improved flatness and/or no mold whitening issues were prepared. PEI resin was used as an additive to improve performance of the compositions. With a suitable loading of PEI resin, the compositions had no mold whitening issues and very good flatness (i.e., low warpage). Bonding strength of the compositions could be improved by including an ionomer (e.g., ethylene-acrylic acid zinc) and/or a PC copolymer (e.g., copolyestercarbonate SLX90/10). When PEI and PC homopolymer were used together as a bonding force promoter, the disclosed compositions showed good glue adhesion performance with glass. In sum, PBT-based compositions including PEI resin as a bonding promoter, glass fiber as the filler, an impact modifier (e.g., ethylene-acrylic ester-glycidyl methacrylate terpolymer), and optionally an ionomer and/or PC homopolymer or PC copolymer, the disclosed compositions had improved flatness, reduced or no mold whitening, high TRI bonding strength, and good mechanical/processing performance. The described compositions are suitable in electronics application such as the antenna split materials in mobile phones and tablets.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a polybutylene terephthalate (PBT) polymer component;
a polyetherimide (PEI) polymer component;
an impact modifier component; and
from about 20 wt% to about 50 wt% of a glass fiber component,
wherein an injection molded sample of the composition has no observed mold whitening,
wherein the combined weight percent value of all components does not exceed 100 wt%, and all weight percent values are based on the total weight of the composition.

2. The thermoplastic composition according to claim 1, wherein the composition comprises from about 30 wt% to about 70 wt% of the PBT polymer component.

3. The thermoplastic composition according to claim 1 or 2, wherein the composition comprises from about 3 wt% to about 20 wt% of the PEI polymer component.

4. The thermoplastic composition according to any of claims 1 to 3, wherein the composition further comprises a polycarbonate component comprising a polycarbonate homopolymer, a polycarbonate copolymer, or a combination thereof.

5. The thermoplastic composition according to claim 4, wherein the polycarbonate component comprises a polycarbonate copolymer comprising isophthalate-terephthalate-resorcinol (ITR) ester units and polycarbonate units.

6. The thermoplastic composition according to claim 4 or 5, wherein the composition comprises from greater than 0 wt% to about 10 wt% of the polycarbonate component.

7. The thermoplastic composition according to any of claims 1 to 6, wherein the composition further comprises from greater than 0 wt% to about 3 wt% of an ionomer component, wherein the ionomer component comprises an acrylate-based ionomer, a sulfonate-based ionomer, or a combination thereof.

8. The thermoplastic composition according to claim 7, wherein the ionomer comprises a cation comprising sodium, magnesium calcium, zinc, or a combination thereof.

9. The thermoplastic composition according to any of claims 1 to 8, wherein the composition further comprises from about 2 wt% to about 10 wt% of the impact modifier component, wherein the impact modifier component comprises an ethylene-acrylic ester-glycidyl methacrylate terpolymer, an ethylene-glycidyl methacrylate copolymer, styrene-ethylene-butylene-styrene (SEBS), or a combination thereof.

10. The thermoplastic composition according to any of claims 1 to 9, wherein the glass fiber component comprises flat glass fibers.

11. The thermoplastic composition according to any of claims 1 to 10, wherein the composition further comprises from about 0.1 wt% to about 2 wt% of at least one additional additive, wherein the at least one additional additive comprises an acid scavenger, an anti-drip agent, an antioxidant, an antistatic agent, a chain extender, a colorant, a mold release agent, a flow promoter, a lubricant, a plasticizer, a quenching agent, a flame retardant, a UV reflecting additive, an impact modifier, a blowing agent, a reinforcing agent, or a combination thereof.

12. The thermoplastic composition according to any of claims 1 to 11, wherein the composition has a metal bonding strength of at least 35 megapascals (MPa) as determined according to ISO 19095 using a TRI-treatment method.

13. The thermoplastic composition according to any of claims 1 to 12, wherein a molded sample of the thermoplastic composition has at least 60% less warpage as compared to a comparative molded sample of a composition that does not include the PEI polymer component.

14. The thermoplastic composition according to any of claims 1 to 13, wherein the composition has a notched Izod impact strength at 23 °C of at least 140 joules per meter (J/m) as tested in accordance with ASTM D256 at 5 pound force per feet (lbf/ft).

15. An article comprising the thermoplastic composition according to any of claims 1 to 14, wherein the article is an antenna split for a mobile telecommunication device.
